# EUROPEAN PATENT APPLICATION

(11) **EP 2 090 640 A1**
(43) Date of publication of application: **19.08.2009**
(21) Application number: 09000295.7
(22) Date of filing: 12.01.2009
(51) Int. Cl.: C09K 11/87, H05B 33/14, H05B 33/18, C09K 11/56, C09K 11/88

(54) **Inorganic phosphor**

(30) Priority: 18.01.2008 JP 2008009497
(71) Applicant: Fujifilm Corporation, Tokyo 106-0031 (JP)
(72) Inventor: Shirata, Masashi, Ashigarakami-gun Kanagawa (JP)
(74) Representative: HOFFMANN EITLE

(57) **Abstract**

An inorganic phosphor includes: a host material that contains at least one host compound selected from the group consisting of compounds of group 2 element with group 16 element of the periodic table and compounds of group 12 element with group 16 element of the periodic table, or a mixed crystal of the host compound; and a dopant that includes at least one metal element selected from the group consisting of first metal elements belonging to second transition series of from group 6 to group 11 of the periodic table and second metal elements belonging to third transition series of from group 6 to group 11 of the periodic table, and does not include Cu and Mn.

## Description

### BACKGROUND OF THE INVENTION

### 1. Field of the Invention

The present invention relates to an inorganic phosphor (hereinafter it is also referred to as an inorganic fluorescent material) useful for, for example, an alternating current dispersion-type inorganic EL element, an alternating current thin film-type inorganic EL element, and a direct current thin film-type inorganic EL element.

### 2. Description of the Related Art

Fluorescent materials are materials which emit light when an energy such as light, electricity, pressure, heat, or electron beams is applied thereto, and are materials which have long been known. Among them, those fluorescent materials which include an inorganic material have been used for a TV tube, a fluorescent lamp, an electroluminescence (EL) element, or the like due to the luminescence properties and stability thereof. In recent years, application thereof to low-speed electron excitation such as in PDP as a color conversion material for use in LED has been vigorously studied.

Electroluminescence (EL) elements using an inorganic phosphor are roughly grouped into an alternating current-driving type and a direct current-driving type. The alternating current-driving type include two kinds of EL elements: one being alternating current dispersion-type EL elements wherein phosphor particles are dispersed in a highly dielectric binder; and the other being alternating current thin film-type EL elements wherein a fluorescent thin film which includes phosphor is sandwiched between dielectric material layers. The direct current-driving type EL elements include a direct current thin film-type EL element which includes a fluorescent thin film sandwiched between a transparent electrode and a metal electrode and which can be driven by a low-voltage direct current.

Next, the direct current-driving type inorganic EL elements will be described below.

The direct current driving-type inorganic EL element had been vigorously studied during 1970's to 1980's (Journal of Applied Physics, 52(9), 5797, 1981). This is an element constituted by forming a film of ZnSe:Mn on a GaAs substrate according to MBE and sandwiching the formed film with an Au electrode. The mechanism is that electrons are injected from the electrode based on the tunnel effect by applying a voltage of about 4V to excite the luminescent center of Mn, thus light being emitted. However, this element has such a low luminous efficiency (about 0.051 m/W) and such a low reproducibility that it has not been practically used and not academically studied since then.

In recent years, novel direct current-driving type inorganic EL elements have been reported (International Publication No. 2007/043676, pamphlet). The luminescent material is a ZnS series one containing a conventionally known luminescent center such as Cu or Mn, and the structure is that this luminescent material is sandwiched between a transparent electrode of an ITO electrode and a backside electrode of an Ag electrode. Although the luminescent mechanism is not described, a postulated mechanism is that a D-A pair is formed between Cu and Cl also contained therein and that injected electrons and holes recombine with each other to emit light.

In comparison with those organic EL elements which emit light based on the same driving technique, the inorganic luminescence device is fully constituted by inorganic materials, and hence it has a high durability and can find applications in various fields such as illumination and display. Further, the inorganic luminescence device is similar to LED which is driven in the same manner, in the point that both are fully constituted by inorganic materials but, since LED has an extremely small luminescent area, i.e., produces a spot light emission, the absolute quantity of light (luminous flux) is small though luminance per unit area is high. Thus, LED has a limited use. On the other hand, the inorganic EL produces a plane emission, and is advantageous in the point that it is possible to obtain many luminous fluxes.

Also, JP-A-2006-233147 (the term "JP-A" as used herein means an "unexamined published Japanese patent application") discloses an inorganic phosphor which comprises zinc sulfide particles containing copper as an activator, containing at least one member selected from among chlorine and bromine as a co-activator, and containing at least one metal element belonging to the second transition series of from the Group 6 to the Group 10 or to the third transition series, and JP-A-4-270780 discloses a phosphor which comprises a host of zinc sulfide containing copper as an activator, at least one of chlorine and bromine as a first co-activator, and gold as a second co-activator.

Further, JP-A-2006-199794 discloses a process for manufacturing a phosphor which comprises using a rare earth element sulfide as a host material, producing a mixture of the host material with an activating agent that contains Pr, Mn, or Au and activates the host material, and heating the produced mixture to thereby activate the host material.

### SUMMARY OF THE INVENTION

However, the direct current-driving type inorganic EL element described in the International Publication No. 2007/043676, pamphlet has a low luminous efficiency and its luminescence wavelength region is limited. Also, the phosphors described in JP-A-2006-233147 and JP-A-4-270780 contain Cu as an activator and are therefore D-A (donor-acceptor) pair light emission type. However, D-A pair light emission type inorganic phosphors involve the problem that, since they can be applied only to alternating current-driving type luminescence device, its use is limited. Further, the phosphor described in JP-A-2006-199794 is considered to be of a localized light emission type using a rare earth sulfide as a host material wherein Mn and/or Pr is localized, but such localized light emission type materials wherein Mn or rare earth element is localized involves the problem that they fail to provide sufficient luminous efficiency though they can be applied to luminescence devices capable of being driven by either of direct current and alternating current.

Under the above-described circumstances, a phosphor has been desired to develop which has a novel luminescent center, which can be applied to a luminescence device capable of being driven by either of direct current and alternating current, and which can provide sufficient luminous efficiency.

Therefore, the present invention provide an inorganic phosphor which has a novel luminescent center, which can be applied to a luminescence device capable of being driven by either of direct current and alternating current, and which can provide sufficient luminous efficiency, a luminescence device using the same, and a direct current thin-film type inorganic EL element.

As a result of intensive investigations, the inventors have found a novel phosphor which shows photoluminescence by ultraviolet ray excitation and electroluminescence by direct current driving, and which is obtained by adding a metal element belonging to the second transition series of from the Group 6 to the Group 11 in the periodic table or a metal element belonging to the third transition series as a dopant into a compound of Group 2 with Group 16, a compound of Group 12 with Group 16 of the periodic table or a mixed crystal thereof without adding conventional luminescent center such as Cu, Mn or rare earth elements.

That is, the invention is achieved by the following constitutions.
(1) An inorganic phosphor comprising:
   a host material that contains at least one host compound selected from the group consisting of compounds of group 2 element with group 16 element of the periodic table and compounds of group 12 element with group 16 element of the periodic table, or a mixed crystal of the host compound; and
   a dopant that includes at least one metal element selected from the group consisting of first metal elements belonging to second transition series of from group 6 to group 11 of the periodic table and second metal elements belonging to third transition series of from group 6 to group 11 of the periodic table, and does not include Cu and Mn.
(2) The inorganic phosphor as described in item (1), further comprising
   an additive that includes at least one element selected from the group consisting of group 13 elements belonging to group 13 of the periodic table and group 15 elements belonging to group 15 of the periodic table.
(3) The inorganic phosphor as described in item (2),
   wherein the group 13 elements consist of Ga, In and T1 and the group 15 elements consist of N, P, Sb, and Bi.
(4) The inorganic phosphor as described in item (2),
   wherein the additive includes at least one element selected from the group 13 elements and at least one element selected from the group 15 elements.
(5) The inorganic phosphor as described in item (4),
   wherein the group 13 elements consist of Ga, In, and Tl, and the group 15 elements consist of N, P, Sb, and Bi.
(6) The inorganic phosphor as described in item (1) or (2),
   wherein the metal element is selected from the the second metal elements.
(7) The inorganic phosphor as described in item (6),
   wherein the the second metal elements consist of Os, Ir, Pt, and Au.
(8) The inorganic phosphor as described in item (1) or (2),
   wherein the host material is ZnS, ZnSe, ZnSSe, SrS, CaS, SrSe or SrSSe.
(9) The inorganic phosphor as described in item (8),
   wherein the host material is ZnS, ZnSe or ZnSSe.
(10) The inorganic phosphor as described in item (1) or (2),
   wherein a content of the dopant is from 1x10⁻⁷ to 1x10⁻¹ mol per one mol of the host material.
(11) The inorganic phosphor as described in item (10),
   wherein the content of the dopant is from 1x10⁻⁵ to 1x10⁻² mol per one mol of the host material.
(12) A luminescence device having an inorganic phosphor as described in any of item (1) to (11).
(13) A direct current thin film-type inorganic electroluminescence element having an inorganic phosphor as described in any of item (1) to (11).

### BRIEF DESCRIPTION OF THE DRAWINGS

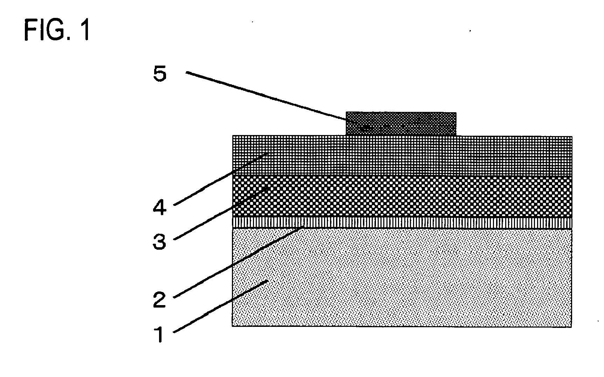

Fig. 1 is a schematic view showing the structure of the direct-current driving type inorganic EL element of Example 3.

### DETAILED DESCRIPTION OF THE INVENTION

The inorganic phosphor of the invention not only emits light based on a novel luminescent center not having existed so far but is useful as a fluorescent material for use in an inorganic electroluminescence element, showing excellent light emission luminance and a prolonged life.

The present invention will be described in detail below.

The inorganic phosphor of the present invention is characterized in that it contains as a host material at least one member selected from among a II Group-XVI Group compound and a XII Group-XVI Group compound, or a mixed crystal thereof, and further contains at least one metal element belonging to the second transition series or the third transition series of from the Group 6 to the Group 11 of the periodic table as a dopant.

Additionally, the II Group-XVI Group compound to be used as a host material of the inorganic phosphor of the invention means a compound comprising at least one element belonging to the Group 2 in the periodic table and at least one element belonging to the Group 16 in the periodic table, and the XII Group-XVI Group compound means a compound comprising at least one element belonging to the Group 12 in the periodic table and at least one element belonging to the Group 16 in the periodic table.

As examples of the host material, at least one compound selected from among the II Group-XVI Group compounds or the XII Group-XVI Group compounds, such as ZnS, ZnSe, ZnTe, CdS, CdSe, CdTe, CaS, SrS, and BaS, or the mixed crystal thereof is used. Among these, ZnS, ZnSe, ZnSSe, SrS, CaS, SrSe, and SrSSe are preferred, with ZnS, ZnSe, and ZnSSe being more preferred.

Examples of the metal elements belonging to the second transition series of from the Group 6 to the Group 11 in the periodic table and the metal elements belonging to the third transition series of from the Group 6 to the Group 11 in the periodic table, which are to be used in the inorganic phosphor of the invention, include Mo, Tc, Ru, Rh, Pd, Ag, W, Re, Os, Ir, Pt, and Au. Of these, Ru, Pd, Os, Ir, Pt, and Au are preferred, with Os, Ir, Pt, and Au being more preferred. These metals may be incorporated independently or in combination thereof.

The method of incorporating the metal elements belonging to the second transition series of from the Group 6 to the group 11 in the periodic table and the metal elements belonging to the third transition series of from the Group 6 to the group 11 into the host material, i.e., doping method is not limited to any method but, for example, the elements may be mixed into the host material in the form of a metal salt upon formation of particles by calcination or, in the case where melting, sublimation or reaction is possible under the calcining conditions, may be mixed into the host material in the form of compound crystals. Portions of the metals other than those incorporated within the crystals of the host material, i.e., portions precipitated or adsorbed on the crystal surface, are preferably removed by etching, washing, or the like. As the metal salts, there may be used any ones such as oxides, sulfides, sulfates, oxalates, halides, nitrates, and nitrides. Of these, oxides, sulfides, and halides are preferably used. These may be used independently, or plural kinds of the metal salts may be used. The doping amount is preferably from 1x10⁻⁷ to 1x10⁻¹ mol, more preferably from 1x10⁻⁵ to 1x10⁻² mol, per one mol of the host material.

In order to more enhance performance as a phosphor, it is effective to incorporate at least one element selected from among the elements belonging to the Group 13 of the periodic table and the elements belonging to the Group 15.

The phosphor contains preferably at least one element selected from the elements belonging to the Group 13 and at least one element selected from the elements belonging to the Group 15, more preferably at least one element selected from among Ga, In, and T1 as the element belonging to the Group 13 and at least one element selected from among N, P, Sb, As, and Bi as the element belonging to the Group 15, particularly preferably Ga as the element belonging to the Group 13 and at least one element selected from among N, P, and Sb as the element belonging to the Group 15.

Also, in the case of incorporating these elements in the phosphor, it is preferred to add a compound comprising an element belonging to the Group 13 and an element belonging to the Group 15 (the XIII Group-XV Group compound).

The content of at least one element selected from among the elements belonging to the Group 13 of the periodic table and the elements belonging to the Group 15 is not particularly limited, but is preferably from 1x10⁻⁷ to 1x10⁻² per one mol of the host material.

In general, alternating current-driving type inorganic EL elements are driven at a voltage of from 50 to 300 V and a frequency of from 50 to 5,000 Hz, whereas direct current-driving type inorganic EL elements have advantage in that they can be driven at a voltage as low as from 0.1 to 20 V. The inorganic phosphor of the invention is useful for an alternating current-type element such as a dispersion type inorganic EL element and a thin film type inorganic EL element and, in addition, a direct current-driving type inorganic EL element, particularly for a direct current-driving type inorganic EL element.

Next, the direct current-driving type inorganic EL element will be described in detail below.

The direct current-driving type inorganic EL element is constituted by at least a transparent electrode (also referred to as "transparent electrically conductive film"), light emitting layer and a backside electrode. The thickness of the light emitting layer is preferably 50 µm or less, more preferably 30 µm or less, in order to realize low-voltage driving because, when the light emitting layer is too thick, the voltage across the both electrodes must be increased for obtaining an electric field strength necessary for light emission. Also, in case when the thickness is too thin, a short circuit is liable to occur between the electrodes on both sides of the phosphor layer. Hence, in order to avoid occurrence of the short circuit, the thickness is preferably 50 nm or more, more preferably 100 nm or more.

As a method for forming the film, there is employed a method commonly employed for forming a film from an inorganic material, such as a physical vacuum deposition method of a resistance heating vacuum deposition method or an electron beam vacuum deposition method, a sputtering method, an ion plating method, or CVD (Chemical Vapor Deposition) method. Since the phosphor to be used in the present invention is stable even at a high temperature and has a high melting point, an electron beam vacuum deposition method which is appropriate for vacuum-depositing a high-melting material or, in the case where a vacuum deposition source can be used as a target, a sputtering method is preferably employed. Further, with the electron beam vacuum deposition method, a vacuum deposition method is also useful wherein plural vacuum deposition sources are used as independent vacuum deposition sources for the metal to be incorporated in a phosphor and for the host material, respectively, in the case where the vapor pressure of the metal to be incorporated in the phosphor is largely different from the vapor pressure of the host material. Further, in order to enhance crystallinity, an MBE (Molecular Beam Epitaxy) method considering lattice matching properties with a substrate is also preferred.

The surface resistivity of the transparent electrically conductive film to be preferably used in the present invention is preferably 10 Ω or less, more preferably from 0.01 Ω/□ to 10 Ω/□, particularly preferably from 0.01 Ω/□ to 1 Ω/□.

The surface resistivity of the transparent electrically conductive film can be measured according to the method described in JIS K6911.

The transparent electrically conductive film is preferably formed on a glass or plastic substrate and contains tin oxide.

That is, as the glass, generally employed glasses such as alkali-free glass and soda-lime glass can be employed, and use of those glasses is preferred which have a high heat resistance and high flatness properties. As the plastic substrate, transparent films such as polyethylene terephthalate, polyethylene naphthalate, and triacetyl cellulose base are preferably used. A transparent electrically conductive substance such as indium tin oxide (ITO), tin oxide, or zinc oxide can be deposited on such substrate to form a film by a method such as vacuum deposition, coating, or printing.

In this case, the surface of the transparent electrically conductive film is preferably made of a layer mainly composed of tin oxide in order to enhance durability.

The deposition amount of the transparent electrically conductive substance constituting the transparent electrically conductive film is preferably from 100% by mass to 1% by mass, more preferably from 70% by mass to 5% by mass, still more preferably from 40% by mass to 10% by mass, based on the transparent electrically conductive film.

The method for preparing the transparent electrically conductive film may be a gas-phase method such as a sputtering method or a vacuum deposition method. It is also possible to form the film by applying a paste-like ITO or tin oxide by coating or screen printing or to form the film by heating the whole film or by heating with a laser.

In the EL element of the present invention, any transparent electrode material that is commonly used can be used as the transparent electrically conductive film. For example, oxides such as tin-doped tin oxide, antimony-doped tin oxide, zinc-doped tin oxide, fluorine-doped tin oxide and zinc oxide, a multi-layer structure wherein a silver thin film is sandwiched between layers having a high refractive index, and a conjugated high molecular compound such as polyaniline or polypyrrole are included.

In order to more reduce resistance, it is preferred to improve electrically conductive properties by, for example, providing mesh-like or stripe-like metal fine wire pattern such as comb-like or grid-like metal wire pattern. For the fine wires of a metal or an alloy, copper, silver, aluminum, nickel, or the like is preferably used. The line thickness of the metal fine wire is arbitrary, and is preferably between about 0.5 µm and about 20 µm. The metal fine wires are disposed with a pitch interval of preferably from 50 µm to 400 µm, particularly from 100 µm to 300 µm. Providing the metal fine wires leads to reduction of light transmittance. It is of importance to minimize this reduction of light transmittance, and it is preferred to ensure a transmittance of 80% or more and less than 100%.

The metal fine wires may be formed by adhesively applying a mesh made of the metal fine wires to the transparent electrically conductive body or by coating or vacuum-depositing a metal oxide or the like on the metal fine wires previously formed on a film by mask vacuum deposition or by etching. Also, the above-described metal fine wires may be formed on a previously formed metal oxide thin film.

As a method different from the above-described methods, a metal thin film having an average thickness of 100 nm or less may be laminated with a metal oxide layer in place of the metal fine wires to form a transparent electrically conductive film. As the metal to be used for the metal thin film, those metals are preferred which have a high corrosion resistance and an excellent extending properties, such as Au, In, Sn, Cu, and Ni, though the metals not being limited only to them.

These plural-layer films preferably realize a high light transmittance, specifically a light transmittance as high as 70% or more, particularly preferably 80% or more. The wavelength for specifying the light transmittance is 550 nm.

Regarding light transmittance, a mono-color light of 550 nm in wavelength is taken out by using an interference filter, and the light transmittance can be measured by means of a commonly used integration type light quantity-measuring device or a spectrum-measuring device using a white light source.

### (Backside electrode)

A backside electrode on the side from which the light is not taken out may use any material that has electrical conductivity. The material is appropriately selected from among metals such as gold, silver, platinum, copper, iron, and aluminum, graphite, and the like depending upon the form of elements to be prepared and upon the temperature in the preparation step. Of them, high thermal conductivity is important, and materials with a thermal conductivity of 2.0 W/cm·deg or more are preferred.

Also, in order to ensure high heat-radiating properties and high energizing properties in the peripheral portion of an EL element, use of a metal sheet or a metal mesh is preferred.

The inorganic phosphor which can be used in the present invention may be formed by a calcination method (solid-phase method) widely employed in this field. For example, with the case of zinc sulfide, fine-particle powder (called green powder) of from 10 nm to 50 nm in particle size is prepared by a liquid-phase process, and this powder is used as primary particles and is mixed with an impure material called an activating agent and subjected to a first calcination in a crucible at a high temperature of from 900°C to 1300°C for 30 minutes to 10 hours together with a flux to thereby obtain particles.

The intermediate phosphor powder obtained by the first calcination is repeatedly washed with deionized water to remove an alkali or alkaline earth metal and remove excess activating agent and co-activating agent.

Then, the thus-obtained intermediate phosphor powder is subjected to a second calcination step. In the second calcination step, heating (annealing) is conducted at a temperature of from 500 to 800°C which is lower than the temperature in the first calcination step, for a short period of from 30 minutes to 3 hours.

The inorganic phosphor may be obtained by the above-described production process and, in the case of using it in a direct current type inorganic EL, the phosphor obtained by the production process is press-molded and subjected to physical vacuum deposition such as electron beam vacuum deposition to thereby obtain an EL element.

### (Examples)

The invention will be described in more detail by reference to Examples which, however, do not limit the invention in any way.

### Example 1

Ir₂(SO₄)₃ is weighed and mixed with ZnS in an amount shown below per 100 g of ZnS in terms of Ir element amount based on Zn element amount. After mixing in a mortar for 20 minutes or more, the mixture is calcined in vacuo at 1100°C for 3 hours. After the calcination, the product is pulverized, washed with water, and dried to obtain an Ir-containing ZnS phosphor.

The wavelength and intensity of emitted light by photoluminescence (PL) upon excitation of the thus-obtained phosphor with 330-nm ultraviolet rays are shown in the following Table 1.

**Table 1**

| | Doping Amount of Ir₂(SO₄)₃ | Wavelength of Emitted Light by PL | Intensity of Emitted Light by PL | Notes |
|---|---|---|---|---|
| Sample A | 0 | No emission of light | No emission of light | Comparative Example |
| Sample B | 1E-7mol/mol Zn | 445 nm | 100 | Present Invention |
| Sample C | 1E-6mol/mol Zn | 445 nm | 800 | Present Invention |
| Sample D | 1E-5mol/mol Zn | 445 nm | 3200 | Present Invention |
| Sample E | 1E-4mol/mol Zn | 445 nm | 1800 | Present Invention |
| Sample F | 1E-3mol/mol Zn | 460 nm | 56 | Present Invention |
| Sample G | 1E-2mol/mol Zn | 458 nm | 40 | Present Invention |

Sample A to which nothing has been added scarcely emits light, whereas sample B is observed to emit light of 445 nm in peak wavelength. Taking this peak intensity as 100, a large increase in the intensity of emitted light is observed, with sample D showing the maximum intensity of 3200. Further, in samples F and G, to which too much amounts of Ir have been added, Ir is unable to be incorporated within ZnS and precipitates on the particle surface, and therefore give a blackish appearance as a whole. In comparison with sample F, the absolute value of the intensity of emitted light of sample G is lower than that of sample F due to the blackness of the particles themselves though it emits light.

The thus-obtained Ir-containing ZnS phosphor is a novel phosphor which shows photoluminescence of blue color of around 445 nm in wavelength, and is one of materials which emit light of the shortest wavelength as materials capable of emitting visible light by doping to ZnS.

### Example 2

A XIII Group-XV Group compound shown below is added in an amount also shown below to sample D described in Example 1, followed by mixing and calcining in vacuo at 700°C for 6 hours. The results are shown in the following Table 2.

**Table 2**

| | Doping Amount of Ir₂(SO₄)₃ | Doping Amount of XIII Group-XV Group Compound |
|---|---|---|
| Sample I | 1E-5mol/mol Zn | InP; 2E-4mol/mol Zn |
| Sample J | 1E-5mol/mol Zn | InSb; 2E-4mol/mol Zn |
| Sample K | 1E-5mol/mol Zn | GaN; 2E-4mol/mol Zn |

It can be seen that emission of light by doping with Ir is more enhanced by the addition of the XIII Group-XV Group compound (comprising an element belonging to the Group 13 and an element belonging to the Group 15 of the periodic table). In particular, addition of InSb provides the highest PL light emission.

### Example 3

A direct-current driving type inorganic EL element is prepared by using the inorganic phosphor of samples D and H to K obtained in Examples 1 and 2 as inorganic fluorescent material. The structure of the direct-current driving type inorganic EL element is schematically shown in Fig. 1

A transparent electrode comprising a transparent glass substrate 1 having formed thereon a first electrode 2 of ITO in a thickness of 200 nm by sputtering is used as a substrate, and the inorganic phosphor of samples D and H to K each is vacuum-deposited to form a film on the substrate by means of an EB vacuum deposition apparatus. More specifically, the inorganic phosphor is disposed as a first vacuum deposition source, and selenium metal is disposed as a second vacuum deposition source. Vacuum deposition from the first vacuum deposition source is conducted at a constant film-forming rate, whereas vacuum deposition from the second vacuum deposition source in the former half of film formation is conducted so that the weight ratio of selenium is 0.5% or less to form a first light emitting layer 3, with the vacuum deposition in the latter half of film formation being conducted so that the weight ratio of selenium is about 1% to stack a second light emitting layer 4. The time ratio of the former half to the latter half is approximately 1:1, and the total thickness of the stacked layers is 2 µm. The vacuum degree within the vacuum deposition chamber used in this occasion is set to 1x10⁻⁶ Torr, and the temperature of the substrate is set to 200°C. Further, in order to improve crystallinity, heat annealing is conducted after film formation in the same chamber at 600°C for 1 hour. Subsequently, a second electrode 5 of silver is vacuum-deposited by resistance heating vacuum deposition to obtain a direct-current driving type inorganic EL element. When the element is connected to a direct current source, with the second electrode 5 of silver electrode as a plus electrode and the first electrode 2 of ITO as a minus electrode and then the current is flowed, emission of light is observed. Sample J shows a higher luminance than other samples by 30% or more, thus showing good results.

## Claims

1. An inorganic phosphor comprising:
a host material that contains at least one host compound selected from the group consisting of compounds of group 2 element with group 16 element of the periodic table and compounds of group 12 element with group 16 element of the periodic table, or a mixed crystal of the host compound; and
a dopant that includes at least one metal element selected from the group consisting of first metal elements belonging to second transition series of from group 6 to group 11 of the periodic table and second metal elements belonging to third transition series of from group 6 to group 11 of the periodic table, and does not include Cu and Mn.

2. The inorganic phosphor as claimed in claim 1, further comprising
an additive that includes at least one element selected from the group consisting of group 13 elements belonging to group 13 of the periodic table and group 15 elements belonging to group 15 of the periodic table.

3. The inorganic phosphor as claimed in claim 2,
wherein the group 13 elements consist of Ga, In and T1 and the group 15 elements consist of N, P, Sb, and Bi.

4. The inorganic phosphor as claimed in claim 2,
wherein the additive includes at least one element selected from the group 13 elements and at least one element selected from the group 15 elements.

5. The inorganic phosphor as claimed in claim 4,
wherein the group 13 elements consist of Ga, In, and Tl, and the group 15 elements consist of N, P, Sb, and Bi.

6. The inorganic phosphor as claimed in claim 1,
wherein the metal element is selected from the the second metal elements.

7. The inorganic phosphor as claimed in claim 6,
wherein the the second metal elements consist of Os, Ir, Pt, and Au.

8. The inorganic phosphor as claimed in claim 1,
wherein the host material is ZnS, ZnSe, ZnSSe, SrS, CaS, SrSe or SrSSe.

9. The inorganic phosphor as claimed in claim 8,
wherein the host material is ZnS, ZnSe or ZnSSe.

10. The inorganic phosphor as claimed in claim 1,
wherein a content of the dopant is from 1x10⁻⁷ to 1x10⁻¹ mol per one mol of the host material.

11. The inorganic phosphor as claimed in claim 10,
wherein the content of the dopant is from 1x10⁻⁵ to 1x10⁻² mol per one mol of the host material.

12. A luminescence device having an inorganic phosphor as claimed in claim 1.

13. A direct current thin film-type inorganic electroluminescence element having an inorganic phosphor as claimed in claims 1.
